# EUROPÄISCHE PATENTANMELDUNG

(11) **EP 4 699 958 A1**
(43) Veröffentlichungstag der Anmeldung: **25.02.2026**
(21) Anmeldenummer: 25194279.3
(22) Anmeldetag: 06.08.2025
(51) Int. Cl.: B65G 1/04, B65G 57/30

(54) **STAPELLAGERANORDNUNG**

(30) Priorität: 12.08.2024 DE 102024122931
(71) Anmelder: Jungheinrich AG, 22047 Hamburg (DE)
(72) Erfinder: Morawietz, Timm, 66636 Tholey-Überroth (DE); Nowack, Adrian, 55131 Mainz (DE); Cavelius, Jörg, 61118 Bad Vilbel (DE)
(74) Vertreter: Keil & Schaafhausen Patentanwälte PartGmbB

(57) **Zusammenfassung**

Die vorliegende Erfindung betrifft eine Stapellageranordnung (1) mit einer Vielzahl von Behälterstapelräumen (2), einem Beschickungsraum (3), der in Schwerkraftrichtung unterhalb der Behälterstapelräume (2) angeordnet ist, und einem im Beschickungsraum (3) bewegbaren Beschickungsfahrzeug (11), das eine Hubeinrichtung aufweist, mit der ein Behälter (14) in einen Behälterstapelraum (2) oder aus einem Behälterstapelraum (2) heraus entlang einer Ein- und Auslagerrichtung verlagerbar ist, wobei jeder Behälterstapelraum (2) an seinem in Schwerkraftrichtung unteren Ende eine Halteeinrichtung mit mindestens einem Halteelement (10) aufweist, das durch eine am Beschickungsfahrzeug (11) angeordnete Betätigungseinrichtung zwischen einer Halteposition und einer Freigabeposition verlegbar ist.

Die Aufgabe der vorliegenden Erfindung liegt darin, eine Stapellageranordnung (1) bereitzustellen, die einfach montiert werden kann.

Diese Aufgabe wird dadurch gelöst, dass das Fixierelement (15) in der Ein- und Auslagerrichtung federnd gelagert ist.

## Beschreibung

Die vorliegende Erfindung betrifft eine Stapellageranordnung mit einer Vielzahl von Behälterstapelräumen, einem Beschickungsraum, der in Schwerkraftrichtung unterhalb der Behälterstapelräume angeordnet ist, und einem im Beschickungsraum bewegbaren Beschickungsfahrzeug, das eine Hubeinrichtung aufweist, mit der ein Behälter in einen Behälterstapelraum oder aus einem Behälterstapelraum heraus verlagerbar ist, wobei jeder Behälterstapelraum an seinem in Schwerkraftrichtung unteren Ende eine Halteeinrichtung mit mindestens einem Halteelement aufweist, das durch eine am Beschickungsfahrzeug angeordnete Betätigungseinrichtung zwischen einer Halteposition, in der es einen im Behälterstapelraum angeordneten Behälter gegen die Schwerkraft hält, und einer Freigabeposition, in der der Behälter am Halteelement vorbei verlagerbar ist, bewegbar ist, wobei das Beschickungsfahrzeug mindestens ein in eine Fixierposition verlagerbares Fixierelement aufweist, das in der Fixierposition mit einem in der Freigabeposition befindlichen Halteelement zusammenwirkt und das Halteelement in der Freigabeposition hält.

In einer derartigen Stapellageranordnung können Behälter in den Behälterstapelräumen gestapelt werden. Die Behälterstapelräume sind dabei vorzugsweise in Form einer Matrix mit Reihen und Spalten angeordnet. Wenn ein Behälter in einem Behälterstapelraum eingelagert werden soll, wird er auf der Hubeinrichtung des Beschickungsfahrzeugs angeordnet. Das Beschickungsfahrzeug fährt durch den Beschickungsraum, bis es sich unterhalb eines vorbestimmten oder gewünschten Behälterstapelraums befindet. Die Hubeinrichtung hebt den Behälter an, bis er die Halteeinrichtung passiert hat. Bei dem Anheben des Behälters wird das Halteelement in die Freigabeposition bewegt. Sobald der Behälter oder ein Teil des Behälters, der für das spätere Halten des Behälters in der Halteeinrichtung verantwortlich ist, die Halteeinrichtung passiert hat, kann das Halteelement wieder in die Halteposition verlagert werden. Wenn die Hubeinrichtung den Behälter absenkt, kommt das Halteelement in Eingriff mit dem Behälter und hält den Behälter gegen die Wirkung der Schwerkraft fest. Das Beschickungsfahrzeug kann dann unter dem entsprechenden Behälterstapelraum wegbewegt werden. Wenn sich zuvor bereits ein oder mehrere Behälter in dem Behälterstapelraum befunden haben, wird beim Anheben der Hubeinrichtung der gesamte Stapel angehoben, sobald der angehobene Behälter in Kontakt mit dem untersten Behälter des Stapels kommt. Ansonsten ist der Einlagervorgang identisch.

Beim Auslagern des Behälters aus dem Behälterstapelraum wird wieder das Beschickungsfahrzeug verwendet. Das Beschickungsfahrzeug wird unter den Behälterstapelraum gefahren und die Hubeinrichtung wird angehoben, bis sie in Kontakt mit dem untersten Behälter eines Behälterstapels in den Behälterstapelraum kommt. Die Hubeinrichtung hebt dann den Behälter, ggfs. mit dem Stapel von weiteren Behältern, die sich darauf befinden, an. Sobald die Halteeinrichtung unbelastet ist, kann das Halteelement in die Freigabeposition bewegt werden. Der Behälterstapel wird dann abgesenkt.

Allerdings muss in der Zeit, in der der untere Behälter die Halteeinrichtung passiert, das Halteelement in der Freigabeposition gehalten werden.

Um die Halteeinrichtung in der Freigabeposition zu halten, beschreibt EP 3 960 657 A1 zusätzlich zu der Betätigungseinrichtung, die das Halteelement in die Freigabeposition bewegt, ein Fixierelement, das am Beschickungsfahrzeug angeordnet ist. Sobald sich das Halteelement in der Freigabeposition befindet, kann es dort durch das Fixierelement fixiert werden, so dass der zu entnehmende Behälter die Halteeinrichtung passieren kann. Sobald es nicht mehr notwendig ist, dass das Halteelement in der Freigabeposition gehalten wird, kann das Fixierelement entfernt werden, so dass das Halteelement wieder in die Halteposition bewegt werden kann.

Diese Vorgehensweise erfordert jedoch, dass die Halteinrichtung eines Stapellagers stets einen gleichen Abstand zu einem Fahrweg des Beschickungsfahrzuges hat, damit das Fixierelement zuverlässig mit einer ihm zugeordneten Halteeinrichtung zusammenwirken kann. Dies erfordert einen hohen Montageaufwand, der zeitintensiv und teuer ist.

Es ist daher Aufgabe der vorliegenden Erfindung eine Möglichkeit vorzuschlagen, die Montage der Halteeinrichtungen eines Stapellagers einfach und schnell zu gestalten

Diese Aufgabe wird durch die Merkmale des Anspruchs 1 gelöst.

Durch die federnde Lagerung können Toleranzen in Schwerkraftrichtung (in Ein- und Auslagerrichtung) und insbesondere Höhendifferenzen zwischen einzelnen Halteelementen einer Halteeinrichtung ausgeglichen werden. Entsprechend kann sichergestellt werden, dass bei Betätigung einer Halteeinrichtung eines Behälteraufnahmeraumes alle Halteelemente in der Freigabeposition angeordnet sind, wenn dies benötigt ist. Weiterhin erlaubt die federnde Lagerung eine gleichmäßige Belastung des Betätigungsmechanismus. Dies führt zu einer verbesserten Lebensdauer. In anderen Worten kompensiert die federnde Lagerung der Fixierelemente montagebedingte Toleranzen der Halteeinrichtung, was die Montage vereinfacht und somit beschleunigt.

Vorzugsweise ist das Fixierelement durch eine Druckfeder vorgespannt. Bei Druckfedern kann ein Federweg auf einfache Weise begrenzt werden, beispielsweise durch eine Hülse, die verhindert, dass die Druckfeder auf Block geht oder dadurch, dass die Druckfeder auf Block geht. Der Federweg beschreibt einen Weg, um den sich das Fixierelement durch Kompression der Feder von einer Endposition in eine gegenüberliegende Endposition bewegen kann. Bei einer Federwegsbegrenzung durch eine Hülse liegt das bewegliche Element (Fixierelement) an der Hülse an, sobald der vorgegebene Federweg ausgeschöpft ist. Folglich wird in diesem Zustand eine Druckkraft direkt über die Hülse ohne eine weitere Kompression der Druckfeder weitergegeben. Es stellt somit ein Fail-Safe-System dar.

Alternativ zur oben beschriebenen Hülse, kann die Anordnung so gestaltet werden, dass die Druckfeder auf Block geht, sobald der Federweg ausgeschöpft ist. Wird eine Kraft auf die Druckfeder übertragen werden, die nicht mehr elastisch von der Druckfeder aufgenommen werden kann, gibt die Druckfeder diese Kraft weiter. Somit kann sichergestellt werden, dass die Anordnung auch bei einer Überbeanspruchung funktioniert. Dieser Fall stellt ebenfalls ein Fail-Safe-System dar.

In Weiterbildung der Erfindung ist um die Feder eine Federführung vorgesehen, um ein Knicken der Feder zu verhindern.

Vorzugsweise beträgt ein Federweg des Fixierelementes 5mm oder weniger. Der Federweg kann bei einem Stapellager an die vorgegebenen Toleranzen angepasst werden. Dadurch können Toleranzen zwischen einem Untergrund, auf dem das Beschickungsfahrzeug fährt, dem Beschickungsfahrzeug und der Halteeinrichtung ausgeglichen werden.

Vorzugsweise weist das Fixierelement eine Schulter auf. Wenn das Halteelement durch das Fixierelement in der Freigabeposition gehalten wird, liegt die Schulter an der Halteeinrichtung an. Dadurch wird sichergestellt, dass das Fixierelement stets in gleicher Position an der Halteeinrichtung anliegt und mit der Halteeinrichtung interagiert.

Das erfindungsgemäß federnd gelagerte Fixierelement kann einfach in bestehenden Blocklagern, deren Halteelemente nach dem oben beschriebenen Prinzip funktionieren, nachgerüstet werden. Dazu müssen lediglich die derzeitigen Fixierelemente entfernt und durch erfindungsgemäße Fixierelemente ausgetauscht werden.

Vorzugsweise weist das Beschickungsfahrzeug eine Steuereinrichtung auf, die das Fixierelement betätigt, wenn sich das Halteelement in der Freigabeposition befindet. Die Steuereinrichtung stellt eine gewisse Reihenfolge von Abläufen sicher, wenn ein Behälter aus dem Behälterstapelraum entnommen werden soll. Zunächst muss durch die Betätigungseinrichtung das Halteelement aus der Halteposition in die Freigabeposition bewegt werden. Erst danach kann das Fixierelement betätigt werden, um das Halteelement in der Freigabeposition zu halten.

In einer bevorzugten Ausgestaltung ist das Halteelement als zweiarmiger Hebel mit einem ersten Arm, der eine Auflagefläche für einen Behälter aufweist, und einem zweiten Arm ausgebildet und das Fixierelement wirkt auf den zweiten Arm. Das Fixierelement befindet sich dann nicht unter der Auflagefläche für den Behälter und kann dadurch die Bewegung des Behälters nicht stören.

Bevorzugt ist das Halteelement in einem zwischen dem Behälterstapelraum und dem Beschickungsraum angeordneten Halter angeordnet und das Fixierelement ist in einen Zwischenraum zwischen dem in der Freigabeposition befindlichen Halteelement und dem Halter bewegbar. Das Halteelement kann sich dann über das Fixierelement am Halter abstützen. Der Halter kann beispielsweise als Rahmen ausgebildet sein, der eine oder mehrere Öffnungen am unteren Ende eines oder mehrerer Behälterstapelräume umgibt.

Vorzugsweise weist das Fixierelement eine sich verjüngende Spitze auf. Damit wird die Bewegung des Fixierelements erleichtert. Auch dann, wenn sich das Beschickungsfahrzeug nicht genau in einer Soll-Position unterhalb des Behälterstapelraums befindet, ist es möglich, das Fixierelement so zu bewegen, dass es mit dem in der Freigabeposition befindlichen Halteelement zusammenwirken kann.

Vorzugsweise weist der Halter eine Führung für das Fixierelement auf. Die sich verjüngende Spitze kann dann in die Führung eintreten. Bei einer weiteren Bewegung wird das Fixierelement automatisch in die gewünschte Position geführt, in der es das sich in der Freigabeposition befindliche Halteelement halten oder fixieren kann.

Hierbei ist bevorzugt, dass die Führung einen Kanal aufweist, der unterhalb des Halteelements und außerhalb eines Behälterbewegungspfades angeordnet ist. Der Kanal kann beispielsweise als Bohrung in einer Platte oder einem anderen Teil des Halters ausgebildet sein.

Vorzugsweise steht das Fixierelement in einer unbetätigten Position senkrecht zur Schwerkraftrichtung weniger weit über das Beschickungsfahrzeug vor als in einer betätigten Position. Das Fixierelement wird also, wenn es nicht zum Fixieren des Halteelements in der Freigabeposition benötigt wird, sozusagen in den Beschickungswagen eingefahren. Im Idealfall wird die Außenkontur des Beschickungswagens, also die Kontur des Beschickungswagens quer zur Schwerkraftrichtung, durch das Fixierelement in der unbetätigten Position nicht vergrößert.

Hierbei ist bevorzugt, dass das Fixierelement in einer am Beschickungsfahrzeug ausgebildeten Kurvenführung geführt ist. Dies ist eine einfache Möglichkeit, um Fixierelemente beim Anheben gegen die Schwerkraftrichtung aus der Kontur des Beschickungsfahrzeugs herauszubewegen und beim Absenken in Schwerkraftrichtung wieder in den Raum innerhalb der Kontur des Beschickungsfahrzeugs einzuführen. Das Beschickungsfahrzeug selbst kann dann relativ genau auf die Bedürfnisse im Beschickungsraum hin ausgelegt werden, beispielsweise darauf, dass die Behälterstapelräume seitlich von Stützen begrenzt sind, die bis zu einem Boden reichen, auf dem das Beschickungsfahrzeug im Beschickungsraum bewegbar ist.

Vorzugsweise weist die Hubeinrichtung einen Hubrahmen mit einer Behälteraufstandsfläche auf, wobei der Hubrahmen zumindest einen Teil der Betätigungseinrichtung bildet. Man benötigt beispielsweise keine weiteren bewegbaren Elemente mehr, um das Halteelement aus der Halteposition in die Freigabeposition zu bewegen. Wenn ein Behälter in einen Behälterstapelraum eingelagert wird, dann wird das Halteelement durch den Behälter selbst geöffnet, wenn der Behälter angehoben wird. Wenn der Behälter aus dem Beschickungsraum entnommen werden soll, dann wird das Halteelement durch den Hubrahmen geöffnet und durch das Fixierelement in einer geöffneten Position, d.h. in der Freigabeposition, gehalten.

Die Erfindung wird im Folgenden anhand eines bevorzugten Ausführungsbeispiels in Verbindung mit der Zeichnung beschrieben. Hierin zeigen:
- Fig. 1: eine perspektivische schematische Ansicht einer Stapellageranordnung,
- Fig. 2: eine perspektivische Darstellung einer Rahmenanordnung am unteren Ende von Behälterstapelräumen,
- Fig. 3: ein zur Stapellageranordnung gehörendes Beschickungsfahrzeug,
- Fig. 4: eine schematische Darstellung einer Fixiereinrichtung mit Fixierelementen,
- Fig. 5: eine schematische Darstellung zur Erläuterung der Bewegung eines Fixierelements,
- Fig. 6: eine Darstellung zur Erläuterung der Einlagerung eines Behälters in einen Behälterstapelraum,
- Fig. 7: eine schematische Darstellung zur Erläuterung einer Entnahme eines Behälters aus einem Behälterstapelraum und
- Fig. 8: eine schematische Darstellung zur Erläuterung der Wirkungsweise des Fixierelements,
- Fig. 9: eine schematische Darstellung eines erfindungsgemäßen Fixierelementes,
- Fig. 10: eine schematische Darstellung einer Federanordnung des Fixierelementes.

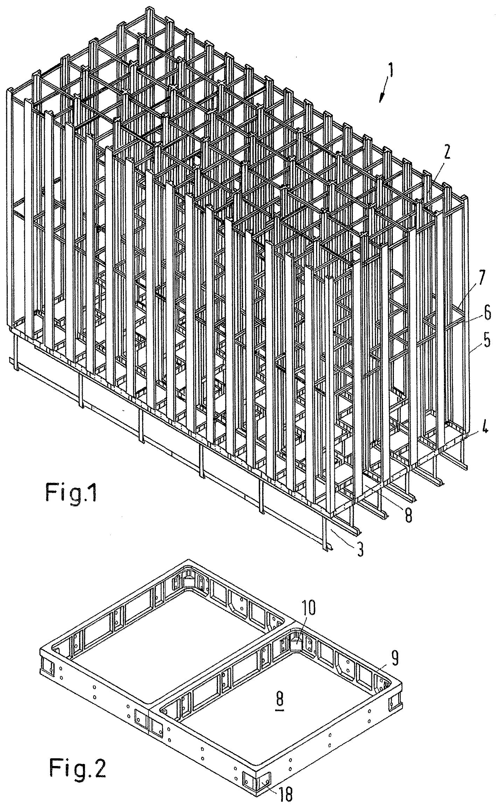

Fig. 1 zeigt eine Stapellageranordnung 1 mit einer Vielzahl von Behälterstapelräumen 2. Am in Schwerkraftrichtung unteren Ende der Behälterstapelräume 2 ist ein Beschickungsraum 3 angeordnet. Zwischen dem Beschickungsraum 3 und den Behälterstapelräumen 2 ist eine Rahmenanordnung 4 vorgesehen.

Die Stapellageranordnung 1 weist eine Vielzahl von vertikal angeordneten Streben 5 auf, die durch horizontale Querstreben 6, 7 miteinander verbunden sind.

Am unteren Ende eines jeden Behälterstapelraums 2 ist eine Öffnung 8 ausgebildet, die in der Rahmenanordnung 4 vorgesehen ist. Hierzu weist die Rahmenanordnung 4 mehrere Halter 9 in Form von Rahmenelementen auf, die beispielsweise miteinander verschraubt sein können. In jeder Ecke des Rahmenelements sind Halteelemente 10 angeordnet. Die vier Halteelemente eines Rahmenelements bilden dann eine Halteeinrichtung. Die Halteelemente 10 und ihre Funktion werden weiter unten näher erläutert.

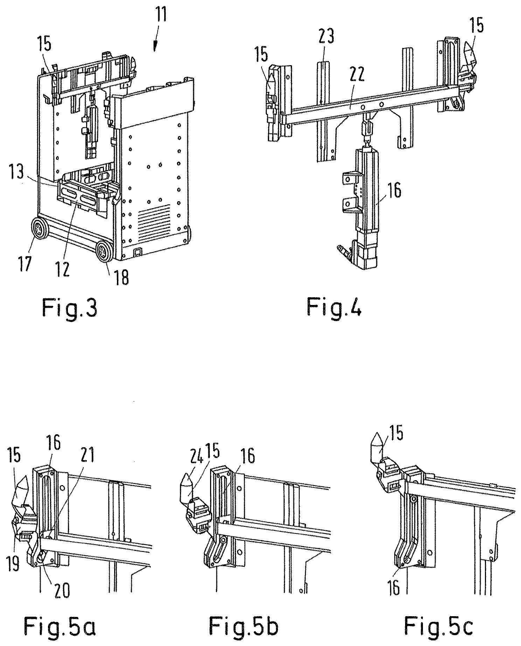

Aus Gründen der Übersicht ist in Fig. 1 ein Beschickungsfahrzeug 11, das zur Stapellageranordnung 1 gehört, nicht dargestellt. Das Beschickungsfahrzeug 11 ist in Fig. 3 dargestellt.

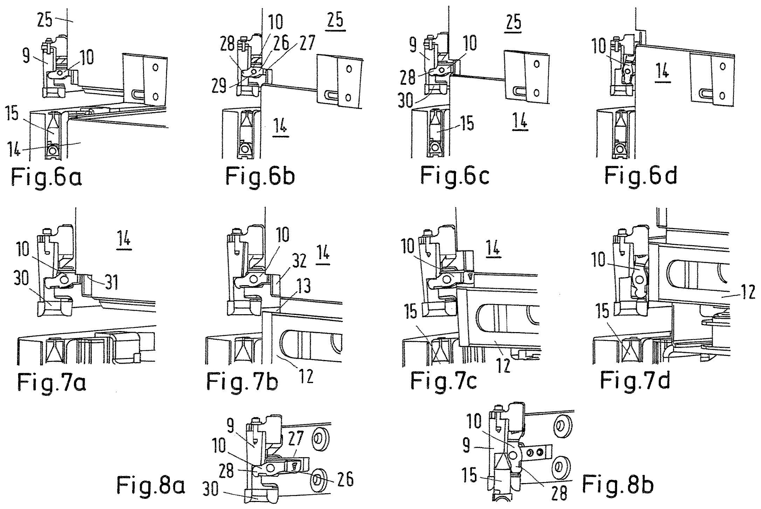

Das Beschickungsfahrzeug 11 weist einen Hubrahmen 12 auf, der über einen nicht näher dargestellten Hubantrieb angehoben und abgesenkt werden kann. Der Hubrahmen 12 weist eine Behälteraufstandsfläche 13 auf, auf die ein in den Fig. 6 und 7 dargestellter Behälter 14 aufgesetzt werden kann.

Zusätzlich zu der Hubplattform 12 und ihrem Hubantrieb weist das Beschickungsfahrzeug 11 mehrere Fixierelemente 15 auf, die über einen Fixierelementantrieb 16 angehoben und abgesenkt werden können. Das Beschickungsfahrzeug 11 weist weiterhin mehrere Räder 17, 18 auf, mit denen das Beschickungsfahrzeug 11 im Beschickungsraum 3 verfahren werden kann.

Jedes Fixierelement 15 ist in einer Kurvenführung 16 geführt. Das Fixierelement 15 ist dabei an einem Träger 19 angeordnet, der über zwei Rollen 20, 21 in der Kurvenführung 16 geführt ist. Wenn das Fixierelement 15 durch den Fixierelementantrieb 16 angehoben wird, wird es aus der in Fig. 5a unbetätigten Position in eine in Fig. 5c dargestellte betätigte Position verlagert. Hierbei wird es quer zur Schwerkraftrichtung aus dem Beschickungsfahrzeug 11 herausbewegt. Wenn das Fixierelement 15 wieder abgesenkt wird, wird es senkrecht zur Schwerkraftrichtung in den Beschickungswagen 11 eingefahren. Dadurch kann man erreichen, dass das Fixierelement 15 nicht über die Außenkontur des Beschickungswagens 11 senkrecht zur Schwerkraftrichtung übersteht, wenn der Beschickungswagen 11 im Beschickungsraum 3 verfahren wird. Der Fixierelementantrieb 16 wirkt gleichzeitig auf zwei Fixierelemente 15. Hierzu sind die beiden Fixierelemente 15 über einen Querträger 22 miteinander verbunden. Der Querträger 22 wiederum ist in Linearführungen 23 geführt. In nicht näher dargestellter Weise kann der Fixierelementantrieb 16 auch noch eine Abdeckung aufweisen.

Das Fixierelement 15 weist eine sich verjüngende Spitze 24 auf, deren Wirkungsweise weiter unten erläutert wird. Es kann im Übrigen eine Zylinderform oder im Querschnitt eine Polygonform aufweisen.

Fig. 6 zeigt, wie ein Behälter 14 in einen Behälterstapelraum 2 eingelagert wird.

Dargestellt ist, dass sich bereits ein weiterer Behälter 25 im Behälterstapelraum 2 befindet. Dieser weitere Behälter 25 stützt sich auf den in den Ecken des Halters 9 befindlichen Halteelementen 10 ab. Dargestellt ist lediglich ein einzelnes Halteelement 10.

Das Halteelement 10 ist als zweiarmiger Hebel ausgebildet mit einem ersten Arm 26, der eine Behälteraufstandsfläche 27 aufweist, und einem zweiten Arm 28. Das Halteelement ist um eine Achse 29 verschwenkbar gelagert.

Der Halter 9 weist unterhalb des zweiten Arms 28 eine Führung 30 auf, in die das Fixierelement 15 eintreten kann, wenn es angehoben wird. Die Führung 30 ist außerhalb eines Bewegungspfades für den Behälter 14 angeordnet.

Fig. 6a zeigt die Ausgangsposition, bei der der in den Behälterstapelraum 2 einzulagernde Behälter 14 von unten an den bereits im Behälterstapelraum 2 befindlichen Behälter 25 heranbewegt wird. In Fig. 6b hat der neue Behälter 14 den bereits im Behälterstapelraum befindlichen Behälter 25 kontaktiert.

In Fig. 6c ist dargestellt, wie die beiden Behälter 14, 25 gemeinsam angehoben werden. Dabei kommt der neu einzulagernde Behälter 14 in Kontakt mit dem Halteelement 10, genauer gesagt mit dem ersten Arm 26 des Halteelements 10, und verschwenkt das Halteelement 10 aus der in den Fig. 6a bis 6c dargestellten Halteposition in die in Fig. 6d dargestellte Freigabeposition. Der Behälter 14 kann in der Freigabeposition des Halteelements 10 am Halteelement 10 vorbei bewegt werden. Hier bildet der Behälter 14 eine Betätigungseinrichtung gemeinsam mit dem Hubrahmen 12, der den Behälter 14 anhebt.

Der neu einzulagernde Behälter 14 wird durch die Hubplattform 12 des Beschickungswagens 11 weiter angehoben, bis eine Haltegeometrie 31 des Behälters 14 das Halteelement 10 passiert hat. Das Halteelement 10 kommt dann wieder zurück in die Halteposition (Fig. 7a), so dass sich der Behälter 14 auf dem Halteelement 10 abstützen kann. Ggfs. kann die Rückbewegung des Halteelements 10 aus der Freigabeposition (Fig. 6d) in die Halteposition (Fig. 7a) durch eine nicht näher dargestellte Feder unterstützt werden.

Fig. 7 zeigt, wie der Behälter 14 aus dem Behälterstapelraum entnommen wird.

Die Hubplattform 12 wird angehoben, bis sie den Behälter 14 kontaktiert. Der Behälter 14 steht dann auf der Behälteraufstandsfläche 13 auf. Das Halteelement 10 ragt in eine Aussparung 32 am unteren Ende des Behälters 14, die im Bereich der Haltegeometrie 31 angeordnet ist, hinein.

Wenn der Hubrahmen 12 weiter angehoben wird, wird zunächst die Belastung des Halteelements 10 durch den Behälter 14 aufgehoben. Das Halteelement 10 ist dann lastfrei. Wenn der Hubrahmen 12 weiter angehoben wird, kann er das Halteelement 10 in die Freigabeposition verschwenken. In diesem Fall bildet der Hubrahmen 12 die Betätigungseinrichtung alleine.

Um eine Rückbewegung des Halteelements 10 in die Halteposition zu verhindern, wenn der Hubrahmen 12 abgesenkt wird, wird in der in Fig. 7d dargestellten Position das Fixierelement 15 betätigt.

Die Wirkung ist in Fig. 8 dargestellt. Fig. 8a zeigt das Halteelement 10 in der Halteposition, in der ein Behälter 14 auf der Auflagefläche 27 des ersten Armes 26 aufliegen kann. Fig. 8b zeigt die Freigabeposition, in der das Halteelement 10 durch das Fixierelement 15 gehalten wird. Das Fixierelement 15 ist dabei durch die Führung 30 hindurchbewegt worden. Die Führung 30 kann an ihrem unteren Ende abgerundet oder konisch ausgebildet sein, um ein Einfädeln der Spitze 24 des Fixierelements 15 zu erleichtern. Durch die Führung 30 wird sichergestellt, dass das Fixierelement 15 beim Anheben zwischen dem Halter 9 und dem zweiten Arm 28 des Halteelements 10 bewegt wird. Das Fixierelement 15 wirkt dabei auf den zweiten Arm 28 und verhindert, dass der zweite Arm 28 wieder in Richtung auf den Halter 9 verschwenkt werden kann.

Anstelle des Halters 9 kann man auch andere Möglichkeiten verwenden, um das Halteelement 10 zu halten.

Der nicht näher dargestellte Hubantrieb des Hubrahmens 12 und der Fixierelementantrieb 16 sind mit einer ebenfalls nicht näher dargestellten Steuereinrichtung verbunden. Die Steuereinrichtung stellt sicher, dass das Fixierelement 15 erst dann in die in Fig. 8b dargestellte Fixierposition verfahren werden kann, wenn sich das Halteelement 10 in der Freigabeposition befindet. Dies lässt sich beispielsweise dadurch sicherstellen, dass man einen Sensor verwendet, der die Position des Halteelements 10 ermittelt, oder dadurch, dass man den Hubweg der Hubeinrichtung für den Hubrahmen 12 überwacht, wobei das Fixierelement 15 erst dann angehoben werden kann, wenn der Hubrahmen 12 soweit angehoben worden ist, dass er das Halteelement 10 in die Freigabeposition, d.h. die geöffnete Position, verschwenkt hat.

Wie man in Fig. 8 erkennen kann, liegt das Halteelement 10 mit seinem zweiten Arm 28 in der Halteposition in Schwerkraftrichtung von unten am Halter 9 an. Der Halter 9 wird also sowohl verwendet, um eine Bewegungsbegrenzung für das Halteelement 10 in der Halteposition zu bilden, als auch dazu, eine Abstützung für das Fixierelement 15 zu bilden, wenn sich das Halteelement 10 in der Freigabeposition befindet. Da das Fixierelement 15 durch den Halter 9 abgestützt ist, kann es relativ schwach dimensioniert werden. Es muss lediglich in der Lage sein, den Zwischenraum zwischen dem Halter 9 und dem zweiten Arm 28 des Halteelements 10 auszufüllen, wenn sich das Halteelement 10 in der in Fig. 8b dargestellten Freigabeposition befindet.

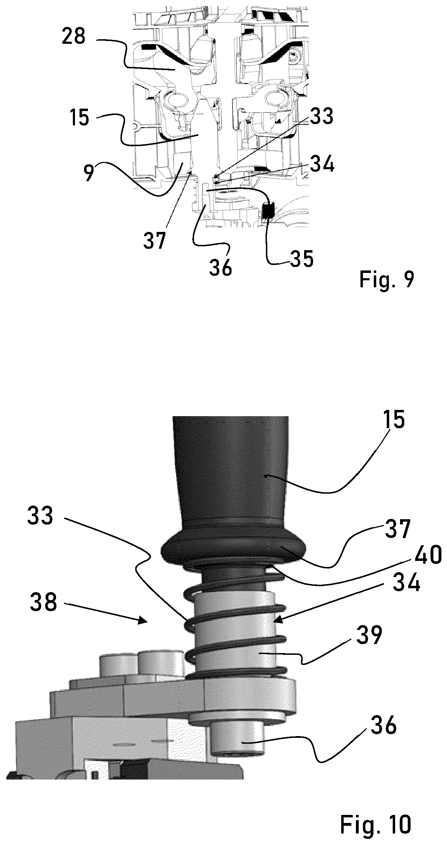

Fig. 9 zeigt ein federnd gelagertes Fixierelement 15. Das Fixierelement 15 ist durch eine Feder 33 so gelagert, dass das Fixierelement 15 bei einer Belastung entgegen der Schwerkraftrichtung einfedern und in Schwerkraftrichtung ausfedern kann. Die Feder 33 ist im vorliegenden Ausführungsbeispiel eine Druckfeder 33. Ein Federweg der Druckfeder 33 beträgt ungefähr 5mm (plus/minus 10%) oder weniger, sodass das Fixierelement um diesen Federweg bewegt werden kann. Die Feder 33 ist durch eine Federführung 34 geführt, um ein Knicken der Feder 33 zu vermeiden.

Das Fixierelement 15 ist durch eine Führung geführt. Dazu weist das Fixierelement 15 eine Bohrung 35 auf, die mit einem Pin 36 zusammenwirkt. Dadurch kann das Fixierelement 15 entlang der Schwerkraftrichtung und entlang der Bohrung 35 bzw. des Pins 36 bewegt werden.

Weiterhin weist das Fixierelement 15 eine Schulter 37 auf. Wenn das Fixierelement 15 in dem Zwischenraum zwischen dem Halter 9 und dem zweiten Arm 28 des Halteelementes 28 angeordnet ist, liegt die Schulter 37 an dem Halter 9 an. Dadurch wird erreicht, dass das Fixierelement 15 in dieser Position stets in einer vorgegebenen Stellung angeordnet ist. Dies erleichtert eine Steuerung des Beschickungsfahrzeuges 11 und damit des ganzen Stapellageranordnung 1.

Durch das oben beschriebene federnd gelagerte Fixierelement 15 können Toleranzen bei der Montage der Halteeinrichtung ausgeglichen werden. Dies erlaubt eine schnelle und einfache Montage.

Fig. 10 zeigt eine schematische Darstellung einer Federanordnung 38 mit der Feder 33, dem Fixierelement 15 mit der Schulter 37, und dem Pin 36. Weiterhin weist die Federanordnung 38 eine Hülse 39 auf. In einem komprimierten Zustand der Feder 33 liegt die Hülse 39 an einem Anschlag 40 der Schulter 37 an. Dadurch wird der Federweg der Feder 33 durch die Hülse 39 beschränkt, ohne dass die Feder 33 auf Block geht. Ein Abstand zwischen der Hülse 39 und dem Anschlag 40 stellt den Federweg dar. Gleichzeitig kann die Hülse als Teil der Federführung 34 ausgebildet sein.

## Patentansprüche

1. Stapellageranordnung (1) mit einer Vielzahl von Behälterstapelräumen (2), einem Beschickungsraum (3), der in Schwerkraftrichtung unterhalb der Behälterstapelräume (2) angeordnet ist, und einem im Beschickungsraum (3) bewegbaren Beschickungsfahrzeug (11), das eine Hubeinrichtung aufweist, mit der ein Behälter (14) in einen Behälterstapelraum (2) oder aus einem Behälterstapelraum (2) heraus entlang einer Ein- und Auslagerrichtung verlagerbar ist, wobei jeder Behälterstapelraum (2) an seinem in Schwerkraftrichtung unteren Ende eine Halteeinrichtung mit mindestens einem Halteelement (10) aufweist, das durch eine am Beschickungsfahrzeug (11) angeordnete Betätigungseinrichtung zwischen einer Halteposition, in der es einen im Behälterstapelraum (2) angeordneten Behälter (14) gegen die Schwerkraft hält, und einer Freigabeposition, in der der Behälter (14) am Halteelement (10) vorbei verlagerbar ist, bewegbar ist, wobei das Beschickungsfahrzeug (11) mindestens ein in eine Fixierposition verlagerbares Fixierelement (15) aufweist, das in der Fixierposition mit einem in der Freigabeposition befindlichen Halteelement (10) zusammenwirkt und das Halteelement (10) in der Freigabeposition hält, **dadurch gekennzeichnet, dass** das Fixierelement (15) in der Ein- und Auslagerrichtung durch eine Feder (33) federnd gelagert ist.

2. Stapellageranordnung nach Anspruch 1, **dadurch gekennzeichnet, dass** das Fixierelement (15) durch eine Druckfeder (33) vorgespannt ist.

3. Stapellageranordnung nach Anspruch 1 oder 2, **dadurch gekennzeichnet, dass** um die Feder (33) eine Federführung (34) vorgesehen ist.

4. Stapellageranordnung nach einem der vorhergehenden Ansprüche, **dadurch gekennzeichnet, dass** ein Federweg des Fixierelementes (15) 5mm oder weniger beträgt.

5. Stapellageranordnung nach einem der vorhergehenden Ansprüche, **dadurch gekennzeichnet, dass** das Fixierelement (15) eine Schulter (37) aufweist.

6. Stapellageranordnung nach einem der vorhergehenden Ansprüche, **dadurch gekennzeichnet, dass** das Beschickungsfahrzeug (11) eine Steuereinrichtung aufweist, die das Fixierelement (15) betätigt, wenn sich das Halteelement (10) in der Freigabeposition befindet.

7. Stapellageranordnung nach einem der vorhergehenden Ansprüche, **dadurch gekennzeichnet, dass** das Halteelement (10) als zweiarmiger Hebel mit einem ersten Arm (26), der eine Auflagefläche (27) für einen Behälter aufweist, und einem zweiten Arm (28) ausgebildet ist und das Fixierelement (15) auf den zweiten Arm wirkt.

8. Stapellageranordnung nach einem der vorhergehenden Ansprüche, **dadurch gekennzeichnet, dass** das Fixierelement (15) eine sich verjüngende Spitze (24) aufweist.

9. Stapellageranordnung nach Anspruch 8, **dadurch gekennzeichnet, dass** der Halter (9) eine Führung (30) für das Fixierelement (15) aufweist.

10. Stapellageranordnung nach Anspruch 9, **dadurch gekennzeichnet, dass** die Führung (30) einen Kanal aufweist, der unterhalb des Halteelements (10) und außerhalb eines Behälterbewegungspfades angeordnet ist.

11. Stapellageranordnung nach einem der vorhergehenden Ansprüche, **dadurch gekennzeichnet, dass** das Fixierelement (15) in einer unbetätigten Position senkrecht zur Schwerkraftrichtung weniger weit über das Beschickungsfahrzeug (11) vorsteht als in einer betätigten Position.

12. Stapellageranordnung nach Anspruch 11, **dadurch gekennzeichnet, dass** das Fixierelement (15) in einer am Beschickungsfahrzeug (11) ausgebildeten Kurvenführung (16) geführt ist.

13. Stapellageranordnung nach einem der vorhergehenden Ansprüche, **dadurch gekennzeichnet, dass** die Hubeinrichtung einen Hubrahmen (12) mit einer Behälteraufstandsfläche (13) aufweist, wobei der Hubrahmen (12) zumindest einen Teil der Betätigungseinrichtung bildet.
